# EUROPEAN PATENT SPECIFICATION

(11) **EP 1 611 523 B1**
(45) Date of publication and mention of the grant of the patent: **21.05.2008**
(21) Application number: 04719548.2
(22) Date of filing: 11.03.2004
(51) Int. Cl.: G06F 9/46, H04L 12/56

(54) **CONTROLLING USAGE OF SYSTEM RESOURCES BY A NETWORK MANAGER**
BENUTZUNGSSTEUERUNG FÜR SYSTEMBETRIEBSMITTEL DURCH EINEN NETZWERKMANAGER
REGULATION DE L'USAGE DES RESSOURCES SYSTEME PAR UN GESTIONNAIRE DE RESEAU

(30) Priority: 09.04.2003 US 409939
(43) Date of publication of application: 04.01.2006
(73) Proprietor: Nokia, Inc., Irving, TX 75039 (US)
(72) Inventor: DAS, Debashis, Maynard, MA 01754 (US)
(74) Representative: Read, Matthew Charles
(86) International application number: PCT/IB2004/000807
(87) International publication number: WO 2004/090660

(56) References cited:
- WO-A2-98/37530
- US-A- 5 274 644
- US-A- 5 522 070
- US-A- 5 613 073
- US-A1- 2003 084 134
- US-B1- 6 247 061
- US-B1- 6 671 724
- US-B2- 6 457 049

## Description

### FIELD OF THE INVENTION

The present invention relates to managing resources in a networked system for executing tasks with a plurality of network devices.

### BACKGROUND OF THE INVENTION

The growth of the Internet and other networks has encouraged many businesses to connect multiple facilities to exchange data. These facilities are often quite numerous, and may be dispersed across large geographic areas. In turn, this typically requires installation and maintenance of software for numerous gateways, routers, switches and other network control devices (nodes) to route and/or control transmission of data among the various facilities. These remote devices may also perform important security functions. As one example, some devices may act as firewalls to prevent unauthorized access to a business' computer network. Other devices may also (or alternatively) provide a Virtual Private Network (VPN) between facilities so as to prevent unauthorized access to communications between facilities. Some devices may act as proxy servers and provide access to the network, to the Internet, and to other networks for multiple individual workstations. Some devices may be configured to limit the types of network access available to a particular workstation or group of workstations. Numerous routing, access control, security and other functions may also be performed.

Operation of the network is typically dynamic, requiring software installation, software updates, backups, file uploads, and software configurations. Operation of each network device is typically governed by operating system and application software that is stored on and executed by the device. Installed software (e.g. operating systems and applications) at each of the remote network devices typically has a large number of configurable parameters that must be set to specific values for desired operation of the network device. Consequently, configuring each remote device may require significant system resources such as network bandwidth and processing resources of a management station. As the number of remote devices increase, the demands on network bandwidth and processing resources increase and the potential for adverse effects is exacerbated. Moreover, different types of tasks (processes), e. g., operating system installation and software inventory, may have different demands on system resources. If too many remote devices are vying for the same system resources at the same time, network performance may experience adverse effects if the demands are not scheduled within the constraints of the system resources.

The market tendency is for networks to become larger with more remote network devices (nodes) that are managed from a system management facility such as a management station. Also, installed software that resides at remote network devices is typically becoming more complex, thus increasing the demands on system resources. Moreover, associated tasks (e. g. software inventory, software installation, software configuration, backups and file uploads) impose different demands on the system resources. Thus, there is a real need to provide apparatus and method that control the allocation of the network resources to tasks associated with the different network devices in order to manage system resources while effectively utilizing the resources.

US 5,274,644 discloses an admission scheme which enables sharing of a common resource among N traffic classes, such that each class is guaranteed (on a suitable longterm basis) a contracted minimum use of the resource, and each class can go beyond the contract when extra resource capacity becomes temporarily available.

WO 98/37530 discloses a method of managing digital resources of a digital system. The method includes the step of reserving token values for certain digital resources in the digital system.

### SUMMARY OF THE INVENTION

The aspects of the present invention manage an allocation of resources for network devices in a networked system. With an aspect of the invention, a usage of a resource is gauged by a number of tokens that are associated with an action for a designated network device. The action is assigned at least one thread, where a thread corresponds to a process that supports the action. As requested, processes are initiated when an available number of tokens in a token pool can support the action. With an aspect of the invention, a request is stored in a request queue if a required number of tokens or threads are not available. The associated action for the designated network device is subsequently initiated when the required number of tokens and threads are available. With another aspect of the invention, when an action for a device completes, the assigned tokens and threads are released for reassignment in order to initiate an action for another network device.

In a first exemplary embodiment of the invention, a network manager initiates actions for designated network devices in a sequential manner. A first action is initiated for at least one network device until either an available number of tokens in the token pool or the number of threads is insufficient to support the first action. When all the network devices have completed the first action, a second action may be initiated for another group of designated network devices.

In a second exemplary embodiment of the invention, a network manager can concurrently support a plurality of actions for network devices. A token pool and a thread pool may be partitioned for different actions so that the number of tokens and number of threads in each set of partitions reflect a usage intensity for a corresponding action.

### BRIEF DESCRIPTION OF THE DRAWINGS

Figure 1 is a block diagram of a system architecture and a collection of network control devices in which the present invention may be implemented,
Figure 2 shows a computing architecture that supports multithreading with a multithreaded processor in which the present invention may be implemented;
Figure 3 shows a computing architecture that supports multithreading with symmetric multiprocessing (SMP) in which the present invention may be implemented;
Figure 4 shows a flow diagram for sequentially performing tasks for different network devices in accordance with an embodiment of the invention;
Figure 5 shows a flow diagram for concurrently performing tasks for different network devices in accordance with an embodiment of the invention;
Figure 6 is a continuation of the flow diagram that is shown in Figure 5;
Figure 7 is a functional architecture on which processes may be executed in accordance with embodiments of the invention; and
Figure 8 shows a screen view of command entries for performing tasks by a network manager.

### DETAILED DESCRIPTION OF THE INVENTION

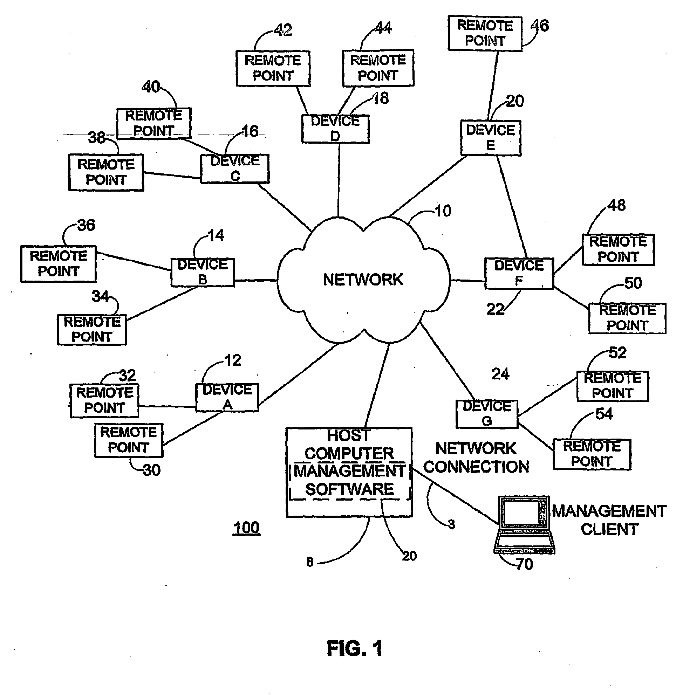

Figure 1 is a block diagram showing a system architecture supporting multiple network control devices that are distributed throughout a data communication system 100. A network 10 may be the Internet, an Intranet, one or more interconnected Wide Area Networks and/or Local Area Networks, or any other data communication network. Connected to and communicating through network 10 are numerous network control devices 12-24. Devices 12-24 may be firewalls, gateways, routers, switches, bridges, proxy servers or other devices. A number of remote points 30-54 communicate through each device 12-24. Remote points 30-54 may be client computers in communication with one or more central hosts or with other clients, sales terminals or other computers having a more limited functionality, database or other servers, or any other component or collection of components capable of data communication. Some devices 12-24 may connect remote points 30-54 through network 10 with other devices and other points within the network, while some devices 12-24 may connect directly to other devices.

Figure 1 also shows a host computer 8 that operates as a network manager. Host computer 8 communicates with devices 12-24, and contains management software 20 for monitoring and/or otherwise controlling devices 12-24. Host computer 8 may further monitor and/or control other aspects of system 100. Host 8 may perform other functions in addition to management of devices 12-24, and indeed may perform functions unrelated to network management. There may be multiple host computers 8 within a system 100, and the management functions of host 8 may be distributed across multiple computers. A management client 70, which may be a separate computer workstation, accesses host computer 8. As one example, management client 70 may represent a portable or desktop computer used by a network administrator to log onto host computer 8 via a local area network connection 3. Alternatively, management client 70 may be more distant from the host 8 (e.g., operating as one of the remote points 30-54). Management client 50 and host computer 8 might also be combined into a single computer.

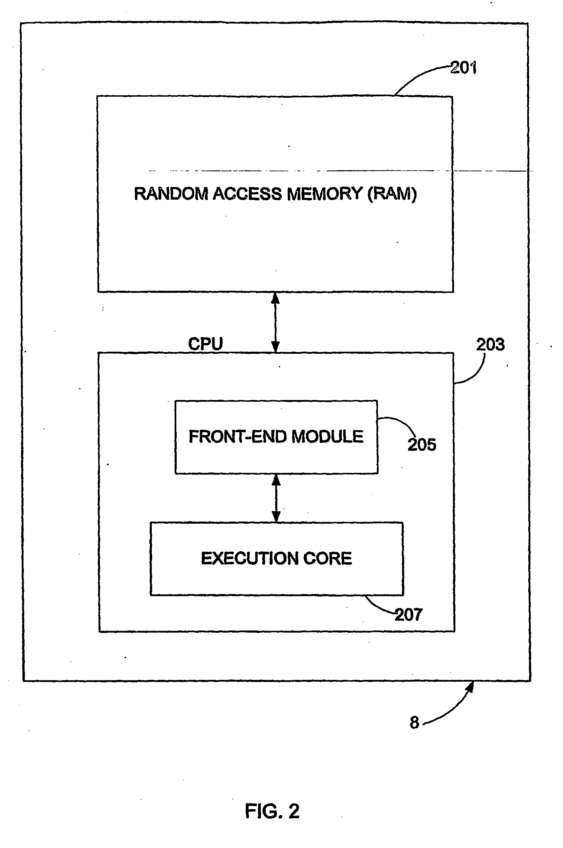

Figure 2 shows a computing architecture that supports multithreading with a multithreaded processor 203 in which the present invention may be implemented. Network manager 8 (as shown in Figure 1) comprises a random access memory (RAM) 201 and processor (CPU) 203. In turn, processor 203 comprises a front-end module 205 and an execution core 207. Processor 203 may execute more than one thread at a time, where each tread corresponds to a process. In the embodiment, random access memory 201 stores a plurality of processes, in which each process is associated with a context. A thread is a part of a process (that may be referred as a program) that executes independently of other parts. Operating systems that support multithreading enable programmers to design programs whose threaded parts can execute concurrently. A context encompasses all the information that describes a process's current state of execution, e.g., the contents of the CPU registers, program counter, and flags.

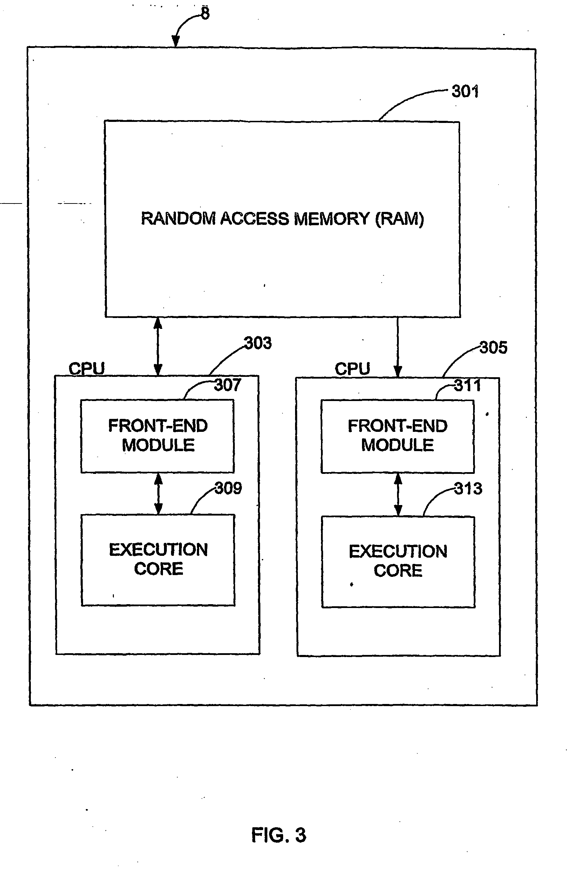

A process is associated with at least one thread, where a thread is executed to support the process. The execution of threads may be controlled by an operating system (OS) running on network manager 8. Even though threads may be bundled together into a process, threads may have a degree of independence from each other. For example, processes may execute on different processors (e.g. CPU 303 and CPU 305 as shown in Figure 3). Moreover, threads that are associated with a same process may execute on different processors.

Referring to Figure 2, front-end module 205 provides a plurality of instructions from random access memory 201 for each clock cycle and sends the instructions to execution core 207 for execution. In the embodiment, each of the plurality of the instructions during the clock cycle is associated with the same thread. (In variations of the embodiment, front-end module 205 may issue instructions that are not associated with the same thread during a clock cycle.) Each executing thread is confined to the clock cycle, where another thread may be executed in the next clock cycle. In such a case, a clock cycle may be referred as a "time slice." With variations of the embodiment, a time slice may comprise a plurality of clock cycles. Front-end module 205 may switch back and forth between threads as instructions are sent to execution core 207 in order to better utilize processing resources of execution core 207.

Figure 3 shows a computing architecture that supports multithreading with symmetric multiprocessing (SMP) in which the present invention may be implemented. Network manager 8 comprises a random access memory 301 and processors (CPUs) 303 and 305. In turn, processor 303 comprises a front-end module 307 and an execution core 309, and processor 305 comprises a front-end module 311 and an execution core 313. As with random access memory 201, random access memory 301 stores a plurality of processes, in which each process is associated with a context. The operating system running on network manager 8 may schedule two processes (threads) for execution at the same time (i.e. during the same time slice), with one thread being executed by execution core 309 and the other thread being executed by execution core 313. Front-end module 307 and front-end module 311 issues instructions to execution core 309 and execution core 313, respectively.

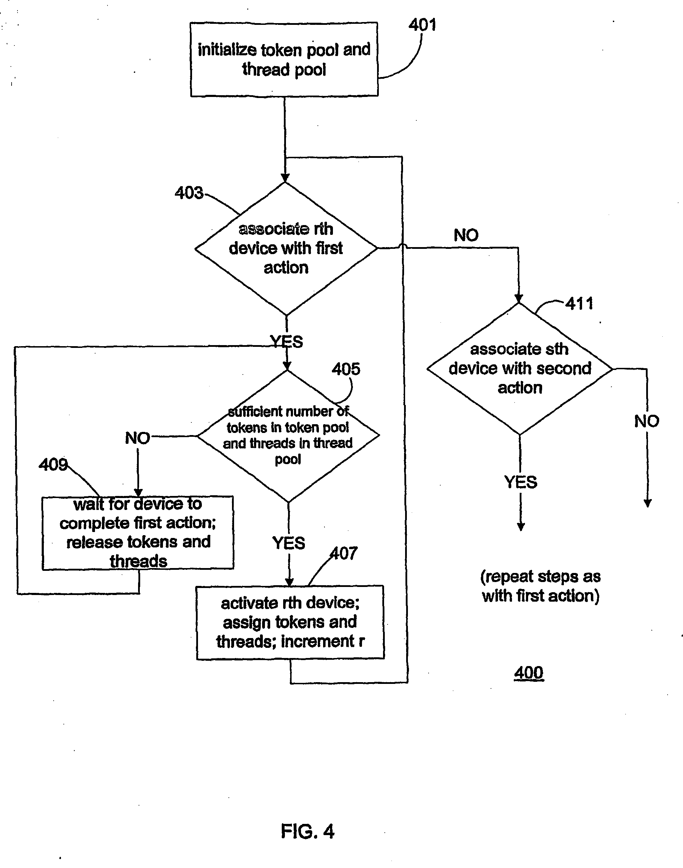

Figure 4 shows a flow diagram 400 for sequentially performing tasks (processes) by network manager 8 for different network devices (nodes), e.g., network devices 12-24 as shown in Figure 1, in accordance with an embodiment of the invention. As an example, a first process may be associated with downloading an application file to network device 12, a second process may be associated with downloading the application file to network device 14, and a third process may be associated with uploading a file from network device 16. In this example, a first action is associated with downloading the application file (to network devices 12 and 14) and a second action is associated with uploading the file (to network 16). (An action may be associated with different activities including a software installation, a password update, a software configuration, a restoration of device configurations, a file upload, and a file backup.)

In step 401, a token pool and a thread pool are initialized. A number of tokens are associated with an action in order to gauge a portion of a system resource that is necessary to support the action. As an example of the embodiment, network manager 8 may assign a weight (e.g. a weight from 1 to 5, where a weight of 1 corresponds to a low cost operation) to an execution of an action for a network device. Each weight corresponds to a number of tokens. For example, a weight of 1 may correspond to 1 token and a weight of 5 may correspond to 5 tokens. However, variations of the embodiment may utilize a different weight-to-token mapping. A password update procedure may be assigned 1 token, while a resource-intensive activity (e.g. an operating system installation) may be assigned 5 tokens. A token pool may be initialized with 100 tokens. Tokens are taken from the token pool and assigned when an activity is initialized for a network device. The tokens are returned to the token pool when the activity has been completed for the network device.

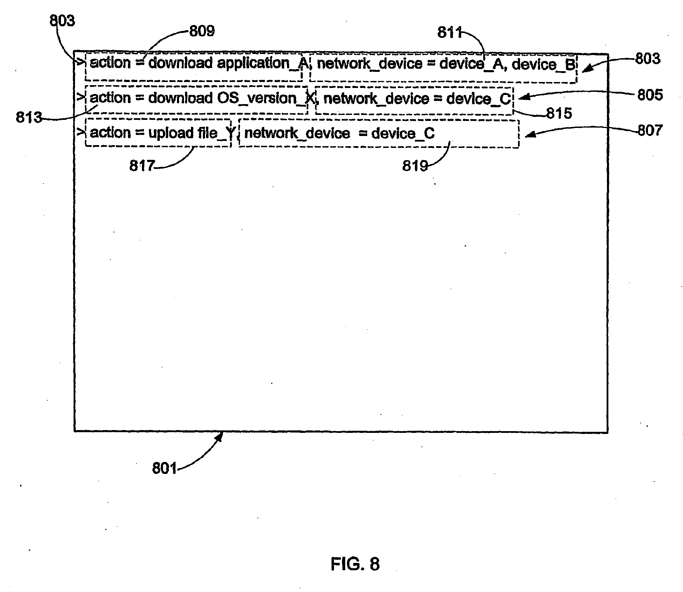

A system resource may correspond to different resources such as a network bandwidth allocation in a forward direction (i.e. from network manager 8 to a network device through network 10) and an associated usage of processing resources of network manager 8. In step 403, in response to a request, the action is associated with one of the requested network devices (designated as the r^{th} device in flow diagram 400). As discussed in the context of Figure 8, an action may be requested for one or more network devices. For example, in Figure 8, an action corresponding to downloading application A is associated with network device A (shown as device 12 in Figure 1) and network device B (device 14).

Associating the action to each device requires a portion of system resources, which is gauged by a required number of tokens. For example downloading a large file typically requires a greater network bandwidth than downloading a small file. In step 405, network manager 8 determines whether a sufficient number of tokens are available in the token pool and a thread is available in the thread pool for activating a process for the action and designated device. (In the embodiment, a process utilizes one thread, although in other embodiments a process may utilize multiple threads.) If a sufficient number of tokens or threads are not available, in step 409 network manager 8 waits for a previously assigned device to complete the action so that the assigned tokens and threads can be released and reassigned to the device in order to execute the action. However, if a sufficient number of tokens and threads are available, the tokens and thread are assigned and the action is activated for the device in step 407. Steps 403-409 are repeated until the action has been activated for all the designated devices. In step 411 and subsequent steps, process 400 activates another action to another group of designated devices. The other group of devices may contain some or all of the devices that are contained in the previous group of devices.

With a variation of the embodiment, the token pool and/or the thread pool may be adjusted in size by manager 8 in order to enhance a utilization of an associated processor (e.g. CPU 203 as shown in Figure 2).

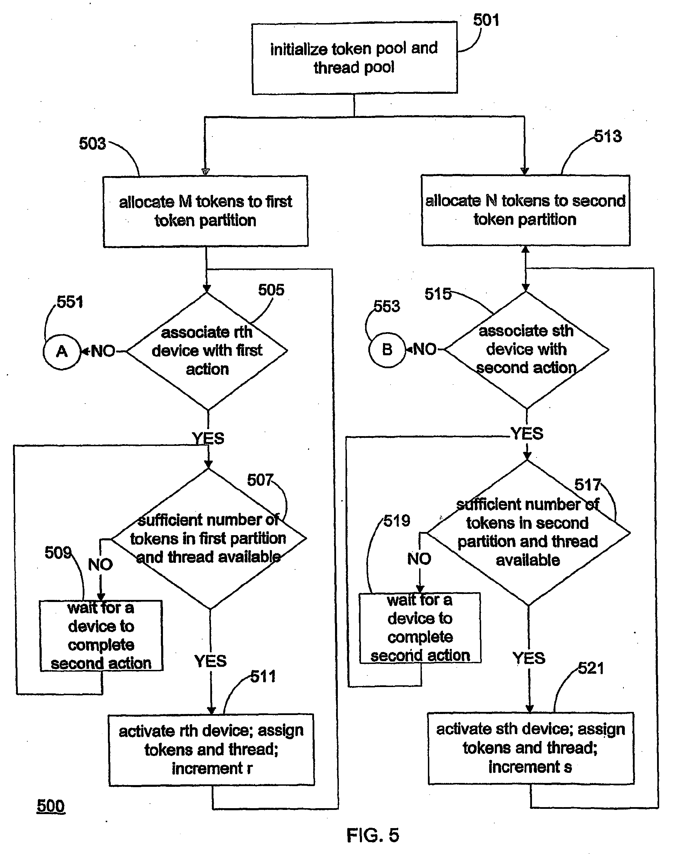

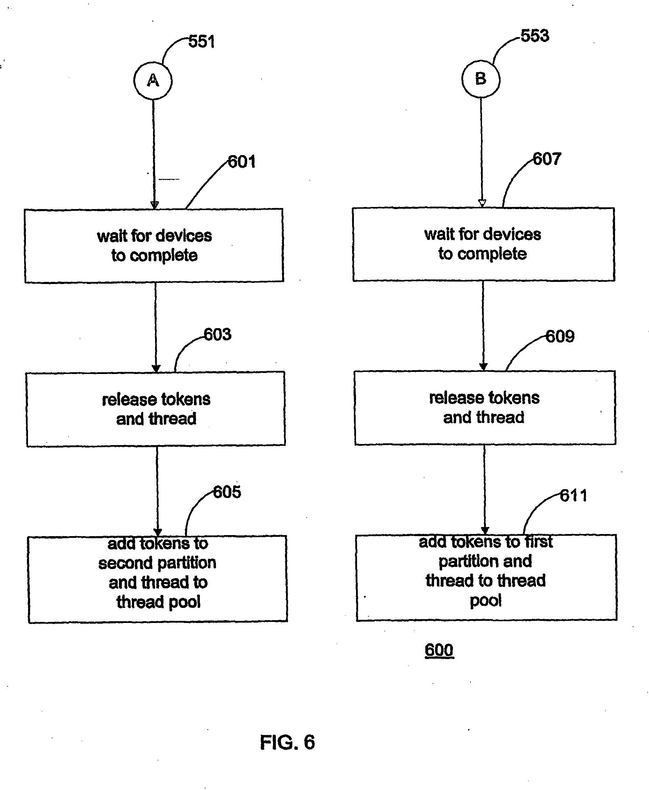

Figure 5 shows a flow diagram 500 for concurrently performing tasks (processes) for different network devices in accordance with an embodiment of the invention. In the embodiment shown in flow diagram 500, different actions may be executed during the same time interval. (In the embodiment shown in flow diagram 400, a previous action is completed before activating a subsequent action.) In process 500 and process 600 (which is a continuation of process 500 and is shown in Figure 6), steps 503-511 and steps 601-605 are concurrently executed with steps 513-521 and steps 607-611.

In steps 503 and 513, the token pool may be partitioned into token partitions that correspond to different actions. (For example, as shown in Figure 8, command line 803 may be executed during the same time duration as command line 805.) Moreover, the thread pool may be partitioned for each action. However, in a variation of the embodiment, the token pool may be shared by a plurality of actions. The token partitions are sized in accordance with intensity of resource utilization by each action. For example, an action corresponding to downloading a version of an operating system may be more resource intensive than performing a software inventory of a network device.

During steps 503-511 and steps 601-605, a first action is activated for designated devices (designated as the r^{th} device in flow diagram 500), while during steps 513-521 and steps 607-611 a second action is activated for another group of designated devices (designated as the S^{th} device). As an example as shown in Figure 8, command line 803 corresponds to activating a first action for downloading application_A for network device A and network device B (as executed by steps 503-511 and steps 601-605), and command line 805 corresponds to activating a second action for downloading OS_version_X to network device C (as executed by steps 513-521 and steps 607-611). In the embodiment, a plurality of actions may be activated for a network device if the network device is capable of concurrent actions.

Figure 6 is a flow diagram 600 and is a continuation of flow diagram 500 that is shown in Figure 5. In step 601 network devices complete the first action and release the assigned tokens and threads in step 603. Consequently, assigned tokens are released to the second token partition if the second action is pending for any network devices in step 605. Similarly, assigned tokens and threads are released and reallocated for the first action in steps 607-611 when network devices complete the second action.

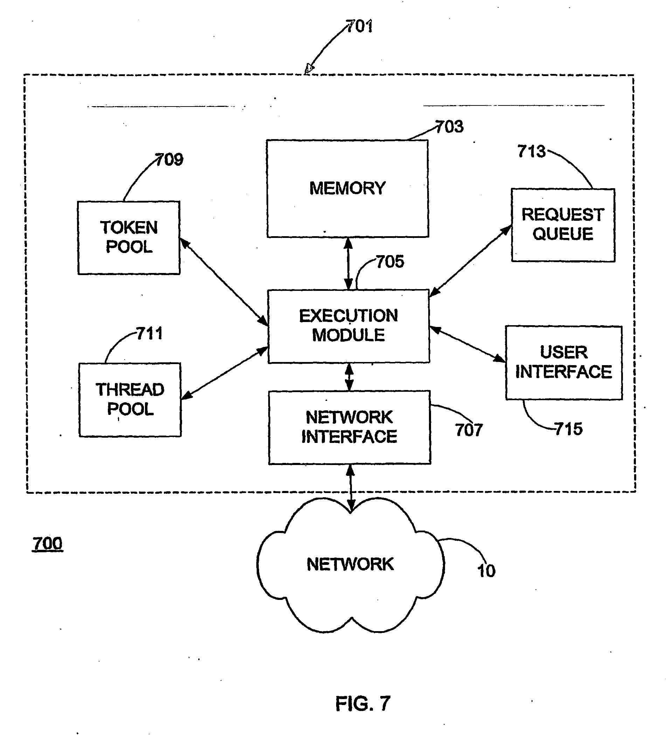

Figure 7 is a functional architecture 700 on which processes may be executed in accordance with embodiments of the invention. A functional architecture 701 corresponds to network manager 8. Functional architecture 701 comprises a memory 703, an execution module 705, a network interface 707, a token pool 709, a thread pool 711, a request queue 713, and a user interface 715. Functional architecture 701 represents a logical functionality of network manager 8. Memory 703 stores processes and may also store other software entities, including files for applications that are executed on network devices, versions of operating systems that are downloaded to network devices, and upload files from network devices. Execution module 705 executes threads for processes in order to perform actions for designated network devices. Execution module 705 may correspond to one processor or a plurality of processors. Also, execution module receives commands from a user through user interface 715 (corresponding to management client 70 in Figure 1). If the associated request cannot be executed by execution module 705, the request is queued in request queue 713 until a sufficient number of tokens and threads are available for initiating the action for the designated network devices in accordance with the command. In a variation of the embodiment, the request may be rejected if a sufficient number of tokens and threads are not available. In such a case, the request may be re-entered through user interface 715.

Token pool 709 stores tokens that gauge a usage of a network resource. Token pool 709 typically comprises memory and may be physically associated with memory 703. Thread pool 711 stores threads and associated contexts and also may be physically associated with memory 703.

Execution module 705 communicates to network devices through network 10 and network interface 707. Communications through network 10 may be either in a forward direction (i.e. in a direction from network manager 8 to a network device) or in a reverse direction (i.e. in a direction from a network device to network manager 8). Consequently, a system resource may be separately associated either for the forward or the reverse direction (e.g. allocated network bandwidth).

Figure 8 shows a screen view 801 of command entries for performing tasks by network manager 8. Screen view 801 is visible to a user through a monitor that is associated with management client 70 as shown in Figure 1. A command line 803 comprises a prompt 803 (">"), an action field 809, and a device field 811. Action field 809 designates the action (downloading application_A), while device field 811 specifies the designated network devices for which the action will be initiated. A command line 805 comprises an action field 813 (downloading OS_version_X) and a device field 815 (network device C), A command line 807 comprises an action field 817 (uploading file_Y from a network device) and a device field 819 (network device C).

As can be appreciated by one skilled in the art, a computer system with an associated computer-readable medium containing instructions for controlling the computer system can be utilized to implement the exemplary embodiments that are disclosed herein. The computer system may include at least one computer such as a microprocessor, digital signal processor, and associated peripheral electronic circuitry.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims. Typographical ordering of elements within the appended claims shall not be construed as a logical ordering of the elements unless otherwise stated.

## Claims

1. A method for controlling a system resource, the method comprising:
(a) receiving a first request to initiate a first action for a first network device (12-24);
(b) determining a first required number of tokens that is necessary to execute the first action, wherein the first required number of tokens corresponds to a first usage of the system resource that is allocated to execute the first action;
(c) determining an available number of tokens remaining in a token pool (709);
(d) if the available number of tokens is as great as the first required number of tokens, and if at least one thread is available from a thread pool (711), assigning a first thread from the thread pool to execute the first action and initiating the first action for the first network device; and
(e) in response to (d), reducing the available number of tokens by the first number of tokens.

2. The method of claim 1, wherein (b) comprises:
(i) assigning a first weight to the first action; and
(ii) mapping the first weight to the first required number of tokens.

3. The method of claim 1, further comprising:
(f) when the first action has been completed for the first network device, relinquishing the first required number of tokens to the token pool and relinquishing the first thread to the thread pool; and
(g) in response to (f), increasing the available number of tokens by the first required number of tokens.

4. The method of claim 1, further comprising:
(f) queuing a second request to initiate the first action for a second network device (12-24) until the available number of tokens is as great as the first required number of tokens.

5. The method of claim 1, further comprising:
(f) denying a second request to initiate the first action for a second network device (12-24).

6. The method of claim 5, wherein the available number of tokens is less than the first required number of tokens.

7. The method of claim 1, further comprising:
(f) receiving a second request to initiate a second action for a second network device (12-24);
(g) determining a second required number of tokens that is necessary to execute the second action, wherein the second required number of tokens corresponds to a second usage of the system resource that is allocated to execute the second action;
(h) determining the available number of tokens remaining in the token pool;
(i) if the available number of tokens is as great as the second required number of tokens, initiating the second action for the second network device; and
(j) in response to (i), reducing the available number of tokens by the second required number of tokens.

8. The method of claim 7, wherein (g) comprises:
(i) assigning a second weight to the second action; and
(ii) mapping the second weight to the second required number of tokens.

9. The method of claim 7, wherein the first action completes before executing the second action.

10. The method of claim 1, further comprising:
(f) separating a total number of tokens into a first token partition and a second token partition, wherein the first token partition is associated with the first action and the second token partition is associated with a second action.

11. The method of claim 1, further comprising:
(f) separating a plurality of threads into a first thread partition and a second thread partition, wherein the first thread partition is associated with the first action and the second thread partition is associated with a second action.

12. The method of claim 1, wherein the first action is selected from a group consisting of a software installation, a password update, a software configuration, a restoration of device configurations, a file upload, and a file backup.

13. The method of claim 1, wherein the system resource is selected from a group consisting of a network bandwidth allocation and a usage of processing resources.

14. The method of claim 13, wherein the network bandwidth allocation is associated with a forward direction from a management station to a network device.

15. The method of claim 13, wherein the network bandwidth allocation is associated with a reverse direction from a network device to a management station.

16. The method of claim 1, further comprising:
(f) adjusting a number of threads in the thread pool in order to enhance a utilization of an execution module (705), wherein the execution module comprises at least one central processing unit (CPU).

17. A computer-readable medium having computer-executable instructions for performing the method recited in claim 1.

18. A computer-readable medium having computer-executable instructions for performing the method recited in claim 3.

19. A computer-readable medium having computer-executable instructions for performing the method recited in claim 4.

20. A manager (8) for controlling usage of a resource of a networked system, the manager comprising:
a token pool (709) for containing a plurality of tokens, wherein each token gauges a utilization of the resource;
a thread pool (711) for containing a plurality of threads, wherein each thread of the thread pool corresponds to a process; and
an execution module (705) for receiving a first request to initiate a first process, determining a required number of tokens that are associated with the first request, determining whether the token pool contains at least the required number of tokens, determining whether one of the plurality of threads is available, and assigning a thread to the first process in accordance with program instructions when the token pool contains at least the required number of tokens and one of the plurality of threads is available, wherein the first process is associated with a first action for a first network device (12-24).

21. The manager of claim 20, further comprising a queuing module for storing the first request for later execution by the execution module if the token pool contains less than the number of tokens or if no threads are available from the thread pool.

22. The manager of claim 20, further comprising a queuing module for storing a second request for later execution by the execution module if the token pool contains less than a number of tokens or if no threads are available from the thread pool, wherein the second request initiates a second process and wherein the second process is associated with a second action for a second network device (12-24).

23. The manager of claim 20, further comprising a user interface, wherein the manager is arranged for receiving a command entered by a user corresponding to at least one request and wherein the at least one request initiates at least one process.

24. The manager of claim 23, wherein the command comprises a first identification that signifies a designated action from a plurality of actions and a second identification that signifies at least one network device, wherein the command initiates the designated action for the at least one network device.

25. The manager of claim 20, further comprising a memory (703) for storing a management application, wherein the management application provides the program instructions for the execution module.

26. The manager of claim 25, wherein the memory is further arranged for storing a software entity that is selected from a group consisting of a user application, a version of an operating system, an uploaded file from a network device, a backup file, a restoration file, and a configuration file.

27. The manager of claim 20, wherein the execution module comprises at least one processor and wherein the at least one processor executes at least one process.

28. The method of claim 1, further comprising:
(f) when the action has been completed for the first network device, relinquishing the required number of tokens to the token pool, relinquishing the first thread to the thread pool, and increasing the available number of tokens by the required number of tokens;
(g) if the available number of token is less than the required number of tokens, queuing the request to initiate the action for a second network device (12-24) until the available number of tokens is as great as the required number of tokens; and
(h) if the available number of tokens is as great as the required number of tokens and if the at least one thread is available from the thread pool, assigning a second thread and initiating the action for the second network device.

## Patentansprüche

1. Verfahren zur Steuerung einer Systemressource, wobei das Verfahren umfasst:
(a) Empfangen einer ersten Anforderung, um eine erste Aktion für ein erstes Netzwerkgerät (12-24) auszulösen;
(b) Bestimmen einer ersten erforderlichen Anzahl von Tokens, die notwendig sind, um die erste Aktion auszuführen, wobei die erste erforderliche Anzahl von Tokens einer ersten Verwendung der Systemressource entspricht, die zuzuweisen ist, um die erste Aktion auszuführen;
(c) Bestimmen einer verfügbaren Anzahl von Tokens, die in einem Tokenpool (709) verbleiben;
(d) wenn die verfügbare Anzahl von Tokens größer als die erste erforderliche Anzahl von Tokens ist, und wenn wenigstens ein Thread aus einem Threadpool (711) verfügbar ist, Zuweisen eines ersten Threads aus dem Threadpool, um die erste Aktion auszuführen und Auslösen der ersten Aktion für das erste Netzwerkgerät; und
(e) in Reaktion auf (d), Reduzieren der verfügbaren Anzahl von Tokens um die erste Anzahl von Tokens.

2. Verfahren gemäß Anspruch 1, wobei (b) umfasst:
(i) Zuweisen eines ersten Gewichts für die erste Aktion; und
(ii) Abbilden des ersten Gewichts auf die erste erforderliche Anzahl von Tokens.

3. Verfahren gemäß Anspruch 1, weiter umfassend:
(f) sobald die erste Aktion für das erste Netzwerkgerät abgeschlossen worden ist, Freigeben der ersten erforderlichen Anzahl von Tokens an den Tokenpool und Freigeben des ersten Threads an den Threadpool; und
(g) in Reaktion auf (f), Erhöhen der verfügbaren Anzahl von Tokens um die erste erforderliche Anzahl von Tokens.

4. Verfahren gemäß Anspruch 1, weiter umfassend:
(f) Stellen einer zweiten Anforderung in eine Warteschlange, um die erste Aktion für ein zweites Netzwerkgerät (12-24) auszulösen, bis die verfügbare Anzahl von Tokens größer als die erste erforderliche Anzahl von Tokens ist.

5. Verfahren gemäß Anspruch 1, weiter umfassend:
(f) Verweigern einer zweiten Anforderung, die erste Aktion für ein zweites Netzwerkgerät (12-24) auszulösen.

6. Verfahren gemäß Anspruch 5, wobei die verfügbare Anzahl von Tokens geringer ist als die erste erforderliche Anzahl von Tokens.

7. Verfahren gemäß Anspruch 1, weiter umfassend:
(f) Empfangen einer zweiten Anforderung, um eine zweite Aktion für ein zweites Netzwerkgerät (12-24) auszulösen;
(g) Bestimmen einer zweiten erforderlichen Anzahl von Tokens, die notwendig ist, um die zweite Aktion auszuführen, wobei die zweite erforderliche Anzahl von Tokens einer zweiten Verwendung der Systemressource entspricht, die zugewiesen wird, um die zweite Aktion auszuführen;
(h) Bestimmen der verfügbaren Anzahl von Tokens, die in dem Tokenpool verbleiben;
(i) wenn die verfügbare Anzahl von Tokens größer als die zweite erforderliche Anzahl von Token ist, Auslösen der zweiten Aktion für das zweite Netzwerkgerät; und
(j) in Reaktion auf (i), Reduzieren der verfügbaren Anzahl von Tokens um die zweite erforderliche Anzahl von Tokens.

8. Verfahren gemäß Anspruch 7, wobei (g) umfasst:
(i) Zuteilen eines zweiten Gewichts der zweiten Aktion; und
(ii) Abbilden des zweiten Gewichts auf die zweite erforderliche Anzahl von Tokens.

9. Verfahren gemäß Anspruch 7, wobei die erste Aktion abschließt bevor die zweite Aktion ausgeführt wird.

10. Verfahren gemäß Anspruch 1, weiter umfassend:
(f) Trennen einer Gesamtanzahl von Tokens in eine erste Tokenpartition und eine zweite Tokenpartition, wobei die erste Tokenpartition der ersten Aktion zugeordnet wird und die zweite Tokenpartition einer zweiten Aktion zugeordnet wird.

11. Verfahren gemäß Anspruch 1, weiter umfassend:
(f) Trennen einer Vielzahl von Threads in eine erste Threadpartition und eine zweite Threadpartition, wobei die erste Threadpartition der ersten Aktion zugeordnet wird und die zweite Threadpartition einer zweiten Aktion zugeordnet wird.

12. Verfahren gemäß Anspruch 1, wobei die erste Aktion aus einer Gruppe ausgewählt wird, die aus einer Softwareinstallation, einer Passwortaktualisierung, einer Softwarekonfiguration, einer Wiederherstellung von Gerätekonfigurationen, einem Dateiheraufladen sowie einer Dateisicherung besteht.

13. Verfahren gemäß Anspruch 1, wobei die Systemressource ausgewählt wird aus einer Gruppe, die aus einer Netzwerkbandbreitenzuweisung und einer Verwendung von Verarbeitungsressourcen besteht.

14. Verfahren gemäß Anspruch 13, wobei die Netzwerkbandbreitenzuweisung einer Vorwärtsrichtung von einer Verwaltungsstation zu einem Netzwerkgerät zugeordnet wird.

15. Verfahren gemäß Anspruch 13, wobei die Netzwerkbandbreitenzuweisung einer Rückwärtsrichtung von einem Netzwerkgerät zu einer Verwaltungsstation zugeordnet wird.

16. Verfahren gemäß Anspruch 1, weiter umfassend:
(f) Anpassen einer Anzahl von Threads in dem Threadpool, um eine Verwendung eines Ausführungsmoduls (705) zu verbessern, wobei das Ausführungsmodul wenigstens eine zentrale Verarbeitungseinheit (CPU) umfasst.

17. Computerlesbares Medium mit computerausführbaren Befehlen zum Durchführen des Verfahrens gemäß Anspruch 1.

18. Computerlesbares Medium mit computerausführbaren Befehlen zum Durchführen des Verfahrens gemäß Anspruch 3.

19. Computerlesbares Medium mit computerausführbaren Befehlen zum Durchführen des Verfahrens gemäß Anspruch 4.

20. Verwaltungseinheit (8) zum Steuern der Verwendung einer Ressource eines vernetzten Systems, wobei die Verwaltungseinheit umfasst:
einen Tokenpool (709) zum Enthalten einer Vielzahl von Tokens, wobei jedes Token eine Verwendung der Ressource bemisst;
einen Threadpool (711) zum Enthalten einer Vielzahl von Threads, wobei jeder Thread des Threadpools einem Prozess entspricht; und
ein Ausführungsmodul (705) zum Empfangen einer ersten Anforderung, einen ersten Prozess auszulösen, zum Bestimmen einer erforderlichen Anzahl von Tokens, die der ersten Anforderung zugeordnet sind, zum Bestimmen, ob der Tokenpool wenigstens die erforderliche Anzahl von Tokens enthält, zum Bestimmen, ob einer der Vielzahl von Threads verfügbar ist, und zum Zuteilen eines Threads dem ersten Prozess gemäß Programmbefehlen, wenn der Tokenpool wenigstens die erforderliche Anzahl von Tokens enthält und einer der Vielzahl von Threads verfügbar ist, wobei der erste Prozess einer ersten Aktion für ein erstes Netzwerkgerät (12-24) zugeteilt wird.

21. Verwaltungseinheit gemäß Anspruch 20, weiter umfassend ein Einreihungsmodul zum Speichern der ersten Anforderung für eine spätere Ausführung durch das Ausführungsmodul, wenn der Tokenpool weniger als die Anzahl von Tokens enthält oder wenn keine Threads aus dem Threadpool verfügbar sind.

22. Verwaltungseinheit gemäß Anspruch 20, weiter umfassend ein Warteschlangenmodul zum Speichern einer zweiten Anforderung für eine spätere Ausführung durch das Ausführungsmodul, wenn der Tokenpool weniger als eine Anzahl von Tokens enthält oder wenn kein Thread aus dem Threadpool verfügbar ist, wobei die zweite Anforderung einen zweiten Prozess auslöst und wobei der zweite Prozess einer zweiten Aktion für ein zweites Netzwerkgerät (12-24) zugeteilt wird.

23. Verwaltungseinheit gemäß Anspruch 20, weiter umfassend eine Anwenderschnittstelle, wobei die Verwaltungseinheit eingerichtet ist zum Empfangen eines durch einen Anwender eingegebenen Befehls entsprechend wenigstens einer Anforderung und wobei die wenigstens eine Anforderung wenigstens einen Prozess auslöst.

24. Verwaltungseinheit gemäß Anspruch 23, wobei der Befehl eine erste Kennung umfasst, die eine bestimmte Aktion aus einer Vielzahl von Aktionen kennzeichnet und eine zweite Kennung, die wenigstens ein Netzwerkgerät kennzeichnet, wobei der Befehl die bestimmte Aktion für das wenigstens eine Netzwerkgerät auslöst.

25. Verwaltungseinheit gemäß Anspruch 20, weiter umfassend einen Speicher (703) zum Speichern einer Verwaltungsanwendung, wobei die Verwaltungsanwendung die Programmbefehle für das Ausführungsmodul zur Verfügung stellt,

26. Verwaltungseinheit gemäß Anspruch 25, wobei der Speicher weiter eingerichtet ist zum Speichern einer Softwareeinheit, die aus einer Gruppe ausgewählt wird, die aus einer Anwenderanwendung, einer Version eines Betriebssystems, einer hochgeladenen Datei von einem Netzwerkgerät, eine Sicherungsdatei, eine Wiederherstellungsdatei sowie eine Konfigurationsdatei besteht.

27. Verwaltungseinheit gemäß Anspruch 20, wobei das Ausführungsmodul wenigstens einen Prozessor umfasst und wobei der wenigstens eine Prozessor wenigstens einen Prozess ausführt.

28. Verfahren gemäß Anspruch 1, weiter umfassend
(f) sobald die Aktion für das erste Netzwerkgerät abgeschlossen worden ist, Freigeben des ersten Threads an den Threadpool und Erhöhen der verfügbaren Anzahl von Tokens um die erforderliche Anzahl von Tokens;
(g) wenn die verfügbare Anzahl von Tokens geringer als die erforderliche Anzahl von Tokens ist, Stellen der Anforderung, um die Aktion für ein zweites Netzwerkgerät (12-24) auszulösen, in eine Warteschlange bis die verfügbare Anzahl von Tokens größer als die erforderliche Anzahl von Tokens ist; und
(h) wenn die verfügbare Anzahl von Tokens größer als die erforderliche Anzahl von Tokens ist und wenn der wenigstens eine Thread aus dem Threadpool verfügbar ist, Zuteilen eines zweiten Threads und Auslösen der Aktion für das zweite Netzwerkgerät.

## Revendications

1. Procédé de contrôle des ressources de système, le procédé comprenant :
a) la réception d'une première demande pour initier une première action pour un premier dispositif de réseau (12 à 24) ;
b) la détermination d'un premier nombre requis de jetons nécessaire pour exécuter la première action, dans lequel le premier nombre requis de jetons correspond à un premier usage des ressources de système qui est attribué pour exécuter la première action ;
c) la détermination d'un nombre disponible de jetons restants dans une réserve de jetons (709) ;
d) si le nombre disponible de jetons est aussi important que le premier nombre requis de jetons et si au moins un fil est disponible dans une réserve de fils (411), l'attribution d'un premier fil de la réserve de fils pour exécuter la première action et l'initiation de la première action pour le premier dispositif de réseau ; et
e) en réponse à d) la réduction du nombre disponible de jetons par le premier nombre de jetons.

2. Procédé selon la revendication 1, dans lequel (b) comprend :
(i) l'attribution d'un premier poids à la première action ; et
(ii) la mise en concordance du premier poids avec le premier nombre requis de jetons.

3. Procédé selon la revendication 1, comprenant en outre :
(f) lorsque la première action a été effectuée pour le premier dispositif de réseau, la restitution du premier nombre requis de jetons à la réserve de jetons et la restitution du premier fil à la réserve de fils ; et
(g) en réponse à (f) l'augmentation du nombre disponible de jetons par le premier nombre requis de jetons.

4. Procédé selon la revendication 1, comprenant en outre :
(f) la mise en file d'attente d'une deuxième demande pour initier la première action pour un deuxième dispositif de réseau (12 à 24) jusqu'à ce que le nombre disponible de jetons soit aussi important que le premier nombre requis de jetons.

5. Procédé selon la revendication 1, comprenant en outre:
(f) le refus d'une deuxième demande pour initier la première action pour un deuxième dispositif de réseau (12 à 24).

6. Procédé selon la revendication 5, dans lequel le nombre disponible de jetons est inférieur au premier nombre requis de jetons.

7. Procédé selon la revendication 1, comprenant en outre :
(f) la réception d'une deuxième demande pour initier une deuxième action pour un deuxième dispositif de réseau (12 à 24) ;
(g) la détermination d'un deuxième nombre requis de jetons nécessaire pour exécuter la deuxième action, où le deuxième nombre requis de jetons correspond à un deuxième usage des ressources de système qui est attribué pour exécuter la deuxième action;
(h) la détermination du nombre disponible de jetons restant dans la réserve de jetons ;
(i) si le nombre disponible de jetons est aussi important que le deuxième nombre requis de jetons, l'initiation de la deuxième action pour le deuxième dispositif de réseau ; et
(j) en réponse à (i) la réduction du nombre disponible de jetons par le deuxième nombre requis de jetons.

8. Procédé selon la revendication 7, dans lequel (g) comprend :
(i) l'attribution d'un deuxième poids à la deuxième action ; et
(ii) la mise en concordance du deuxième poids avec le deuxième nombre requis de jetons.

9. Procédé selon la revendication 7, dans lequel la première action prend fin avant l'exécution de la deuxième action.

10. Procédé selon la revendication 1, comprenant en outre :
(f) la séparation d'un nombre total de jetons en une première division de jetons et une deuxième division de jetons, où la première division de jetons est associée à la première action et la deuxième division de jetons est associée à une deuxième action.

11. Procédé selon la revendication 1, comprenant en outre :
(f) la séparation d'une pluralité de fils dans une première division de fils et une deuxième division de fils, où la première division de fils est associée à une première action et la deuxième division de fils est associée à la deuxième action.

12. Procédé selon la revendication 1, dans lequel la première action est sélectionnée dans un groupe constitué d'une installation de logiciel, d'une mise à jour de mot de passe, d'une configuration de logiciel, d'une restauration de configurations de dispositif, d'un téléchargement de fichier et d'une sauvegarde de fichier.

13. Procédé selon la revendication 1, dans lequel les ressources de système sont sélectionnées dans un groupe constitué d'une allocation de bande passante de réseau et de l'usage de ressources de traitement.

14. Procédé selon la revendication 13, dans lequel l'allocation de bande passante de réseau est associée à une direction vers l'avant d'un dispositif de réseau à un poste de gestion.

15. Procédé selon la revendication 13, dans lequel l'allocation de bande passante de réseau est associée à une direction inverse d'un poste de gestion à un dispositif de réseau.

16. Procédé selon la revendication 1, comprenant en outre :
(f) l'ajustement d'un certain nombre de fils dans la réserve de fils pour renforcer l'utilisation d'un module d'exécution (705), dans lequel le module d'exécution comprend au moins une unité centrale (UC).

17. Support lisible par ordinateur comportant des instructions exécutables sur ordinateur pour exécuter le procédé selon la revendication 1.

18. Support lisible par ordinateur comportant des instructions exécutables sur ordinateur pour exécuter le procédé selon la revendication 3.

19. Support lisible par ordinateur comportant des instructions exécutables sur ordinateur pour exécuter le procédé selon la revendication 4.

20. Gestionnaire (8) destiné à gérer l'usage des ressources d'un système en réseau, le gestionnaire comprenant :
une réserve de jetons (709) destinée à contenir une pluralité de jetons, dans laquelle chaque jeton étalonne une utilisation des ressources ;
une réserve de fils (711) destinée à contenir une pluralité de fils, dans laquelle chaque fil de la réserve de fils correspond à un procédé ; et
un module d'exécution (705) destiné à recevoir une première demande pour initier un premier procédé, à déterminer un nombre requis de jetons qui sont associés à la première demande, à déterminer si la réserve de jetons contient au moins le nombre requis de jetons, à déterminer si l'un de la pluralité de fils est disponible et à attribuer un fil au premier procédé selon les instructions de programme lorsque la réserve de jetons contient au moins un nombre requis de jetons et un de la pluralité de fils est disponible, dans lequel le premier procédé est associé à une première action pour un premier dispositif de réseau (12 à 24).

21. Gestionnaire selon la revendication 20, comprenant en outre un module de mise en file d'attente pour stocker la première demande pour une exécution ultérieure par le module d'exécution si la réserve de jetons contient un nombre inférieur au nombre de jetons ou si aucun fil n'est disponible dans la réserve de fils.

22. Gestionnaire selon la revendication 20, comprenant en outre un module de mise en file d'attente pour stocker une deuxième demande pour une exécution ultérieure par le module d'exécution si la réserve de jetons contient un nombre inférieur au nombre de jetons ou si aucun fil n'est disponible dans la réserve de fils, dans lequel la deuxième demande initie un deuxième procédé et dans lequel le deuxième procédé est associé à une deuxième action pour un deuxième dispositif de réseau (12 à 24).

23. Gestionnaire selon la revendication 20, comprenant en outre une interface utilisateur, dans lequel le gestionnaire est agencé pour recevoir un ordre entré par un utilisateur correspondant à au moins une demande et dans lequel la au moins une demande initie au moins un procédé.

24. Gestionnaire selon la revendication 23, dans lequel l'ordre comprend une première identification qui signifie une action désignée parmi une pluralité d'actions et une deuxième identification qui signifie au moins un dispositif de réseau, dans lequel l'ordre initie l'action désignée pour le au moins un dispositif de réseau.

25. Gestionnaire selon la revendication 20, comprenant en outre une mémoire (703) pour stocker une application de gestion, dans lequel l'application de gestion fournit les instructions de programme pour le module d'exécution.

26. Gestionnaire selon la revendication 25, dans lequel la mémoire est en outre agencée pour stocker une quantité logicielle sélectionnée dans un groupe constitué d'une application utilisateur, d'une version d'un système d'exploitation, d'un fichier téléchargé auprès d'un dispositif de réseau, d'un fichier de sauvegarde, d'un fichier de restauration et d'un fichier de configuration.

27. Gestionnaire selon la revendication 20, dans lequel le module d'exécution comprend au moins un processeur et dans lequel le au moins un processeur exécute au moins un procédé.

28. Procédé selon la revendication 1, comprenant en outre :
(f) lorsque l'action a pris fin pour le premier dispositif de réseau, la restitution du nombre requis de jetons à la réserve de jetons, la restitution du premier fil à la réserve de fils et l'augmentation du nombre disponible de jetons par le nombre requis de jetons ;
(g) si le nombre disponible de jetons est inférieur au nombre requis de jetons, la mise en file d'attente de la demande pour initier l'action pour un deuxième dispositif de réseau (12 à 24) jusqu'à ce que le nombre disponible de jetons soit aussi important que le nombre requis de jetons ; et
(h) si le nombre disponible de jetons est aussi important que le nombre requis de jetons et si le au moins un fil est disponible dans la réserve de fils, l'attribution d'un deuxième fil et l'initiation de l'action pour le deuxième dispositif de réseau.
